# EUROPEAN PATENT APPLICATION

(11) **EP 4 531 163 A1**
(43) Date of publication of application: **02.04.2025**
(21) Application number: 24824377.6
(22) Date of filing: 08.07.2024
(51) Int. Cl.: H01M 10/42

(54) **BATTERY AND BATTERY SYSTEM**

(30) Priority: 28.07.2023 CN 202322015107 U; 23.11.2023 CN 202323185051 U
(71) Applicant: Eve Power Co., Ltd., Jingmen, Hubei 448000 (CN)
(72) Inventor: ZHOU, Yu, Jingmen, Hubei 448000 (CN); ZHANG, Minhui, Jingmen, Hubei 448000 (CN); QIU, Zhangheng, Jingmen, Hubei 448000 (CN); SONG, Chengmao, Jingmen, Hubei 448000 (CN); CHEN, Xianyang, Jingmen, Hubei 448000 (CN); SUN, Fei, Jingmen, Hubei 448000 (CN); HE, Wei, Jingmen, Hubei 448000 (CN); LIU, Jincheng, Jingmen, Hubei 448000 (CN)
(74) Representative: Berggren Oy
(86) International application number: PCT/CN2024/104176
(87) International publication number: WO 2025/025994

(57) **Abstract**

The present application provides a battery and a battery system. The battery includes a cell, a data processing chip, and a charging protector. The charging protector is electrically connected to the cell and the data processing chip, and is arranged to control the on or off of a circuit connecting the cell and the data processing chip, thereby avoiding overcharging or short circuiting of the cell due to damage of the data processing chip, prolonging service life of the cell, and being beneficial to improving service life and working stability of the battery system.

## Description

This application claims priority to Chinese Patent Application Serial No. 202322015107.0 filed to CNIPA on July 28, 2023 and 202323185051.X filed to CNIPA on November 23, 2023. The content of the aforementioned application is incorporated herein by reference.

### TECHNICAL FIELD

The present application relates to a technology field of battery, exemplarily, relates to a battery and a battery system.

### BACKGROUND

In order to protect safety of a battery, the battery cannot be over-charged or over-discharged during use, and it is also necessary to monitor internal states of various physical environments of the battery. In related arts, a data processing chip is usually used to receive data collected by sensors such as temperature and pressure, and the received data is processed and transmitted to an external terminal to monitor the internal state of the battery.

Among them, the data processing chip of the battery is connected in series with a cell, and the cell supplies power to the data processing chip.

### SUMMARY

However, when the data processing chip is damaged, positive and negative poles of the cell will be directly connected, resulting in a short circuit.

In a first aspect, the present application provides a battery, the battery cover includes:
a cell;
a data processing chip; and
a charging protector electrically connected to the cell and the data processing chip; wherein the charging protector is arranged to control on or off of a circuit connected to the cell and the data processing chip.

In a second aspect, the present application also provides a battery system including a battery, the battery includes:
a cell;
a data processing chip; and
a charging protector electrically connected to the cell and the data processing chip; wherein the charging protector is arranged to control on or off of a circuit connected to the cell and the data processing chip

### BENEFICIAL EFFECTS

In the battery provided by the present application, the charging protector is electrically connected to the cell and the data processing chip, when power of the data processing chip is insufficient, the charging protector can charge the data processing chip through the cell, so that the data processing chip works stably. At the same time, it can also avoid over-charging caused by the cell charging the data processing chip all the time or short circuit of the cell due to damage of the data processing chip, thus prolonging service life of the cell.

In the battery system provided by the present application, the charging protector of the battery is electrically connected to the cell and the data processing chip. When the power of the data processing chip is insufficient, the charging protector can charge the data processing chip through the cell, so that the data processing chip works stably. At the same time, it can avoid over-charging caused by the cell charging the data processing chip all the time or short circuit of the cell due to damage of the data processing chip, thus prolonging the service life of the cell, and being beneficial to improving service life and working stability of the battery system.

### BRIEF DESCRIPTION OF THE DRAWINGS

FIG. 1 is a schematic diagram of a first embodiment of a battery of the present application.
FIG. 2 is a schematic diagram of another perspective of the battery shown in FIG. 1.
FIG. 3 is an enlarged diagram at A in FIG. 2.
FIG. 4 is a circuit diagram of the battery shown in FIG. 1.
FIG. 5 is a schematic diagram of a second embodiment of the battery of the present application.
FIG. 6 is an enlarged diagram at B in FIG. 5.
FIG. 7 is a circuit diagram of the battery shown in FIG. 5.
FIG. 8 is a schematic diagram of an application scenario of the battery provided by the present application.
FIG. 9 is a partial structural schematic diagram of a third embodiment of a battery provided by the present application.
FIG. 10 is a perspective schematic diagram of a partial structure of the battery in FIG. 9.
FIG. 11 is a perspective schematic diagram of a data processing chip, a connecting wire assembly, a positive electrode connecting tab and a negative electrode connecting tab of the battery provided by the present application.
FIG. 12 is a structural schematic diagram of a positive electrode connecting tab with a groove provided in a first embodiment of the present application.
FIG. 13 is an enlarged diagram of a partial structure of positive electrode connecting tab with a groove provided in the present application.
FIG. 14 is an enlarged diagram of a partial structure of a positive electrode connecting tab with a groove provided in a second embodiment of the present application.
FIG. 15 is a structural schematic diagram of a first adapter clamp provided by a first embodiment of the present application.
FIG. 16 is a structural schematic diagram of a first adapter clamp provided by a second embodiment of the present application.
FIG. 17 is a structural schematic diagram of a first adapter clamp provided by a third embodiment of the present application.
FIG. 18 is a perspective schematic diagram of a structure of the first adapter clamp in FIG. 17.
FIG. 19 is a structural schematic diagram of a first adapter clamp clamped on a positive electrode connecting tab provided by an embodiment of the present application.
FIG. 20 is a structural schematic diagram of a first adapter clamp clamped on a positive electrode connecting tab with a groove provided by an embodiment of the present application.
FIG. 21 is another structural schematic diagram of a first adapter clamp clamped on a positive electrode connecting tab with a groove provided by the embodiment of the present application.

Description of reference numbers:
battery 100; cell 10; cell body 1010; first pole 11; second pole 12; data processing chip 20; charging protector 30; switching transistor 31; protecting chip 32; pressure sensor 40; temperature sensor 50; external module 1001; first pole lug 1002; second pole lug 1003; positive electrode connecting tab 1005; first groove 1101; negative electrode connecting tab 1004; top covering assembly 2001; connecting wire assembly 200; first connecting line 2003; second connecting line 2004; adapter clamp assembly 2000; first adapter clamp 2002; first supporting arm 501; first conductive wire hole 504; first clamping arm 502; second adapter clamp 2005.

### DETAILED DESCRIPTION OF THE EMBODIMENTS

In a description of this application, unless otherwise explicitly specified and defined, the terms "connected", "connected", and "fixed" are to be understood broadly, for example, as fixed connection, detachable connection, or integral. It may be a mechanical connection or an electrical connection. It may be directly connected, or indirectly connected through an intermediate medium, or it can be the internal communication of two elements or the interaction between two elements. Specific meanings of the above-mentioned terms in the present application will be understood by those skilled in the art as the case may be.

In the present application, unless otherwise explicitly specified and defined, the first feature being "above" or "below" the second feature may include that the first and second features are in direct contact, or may include that the first and second features are not in direct contact but are in contact by another feature therebetween. Furthermore, the first feature being "above" the second feature includes that the first feature is directly above and obliquely above the second feature, and a horizontal height of the first feature is higher than that of the second feature. The first feature being "below" the second feature includes that the first feature is directly below and obliquely below the second feature, the horizontal height of the first feature is smaller than that of the second feature.

In the description of this embodiment, the terms "upper", "lower", "left", "right", "front", "rear" and other orientations or positional relationships are based on orientations or positional relationships shown in accompanying drawings, for convenience of description and simplification of operation, and do not indicate or imply that the referred device or element may have a specific orientation, be constructed and operate in a specific orientation, and therefore cannot be understood as a limitation of the present application. Furthermore, the terms "first" and "second" are used to distinguish in description and do not have a special meaning.

In order to protect safety of the battery, the battery cannot be over-charged or over-discharged during use, and it is also necessary to monitor internal states of various physical environments of the battery. In a related art, a data processing chip is usually used to receive data collected by sensors such as temperature data and pressure data, and the data received by the data processing chip is processed and transmitted to an external terminal to monitor the internal states of the battery.

At present, there are two setting ways to the data processing chip and the cell. A first setting way is that the data processing chip is connected in series with the cell, and the cell supplies power to the data processing chip. However, in this way, when the data processing chip is damaged, a positive pole and a negative pole of the cell will be directly connected, resulting in a short circuit. A second setting way is that the cell does not power for the data processing chip, but in this way, when the data processing chip is exhausted, it cannot be effectively charged, resulting in the data processing chip being unable to monitor the stability of the internal states of the battery.

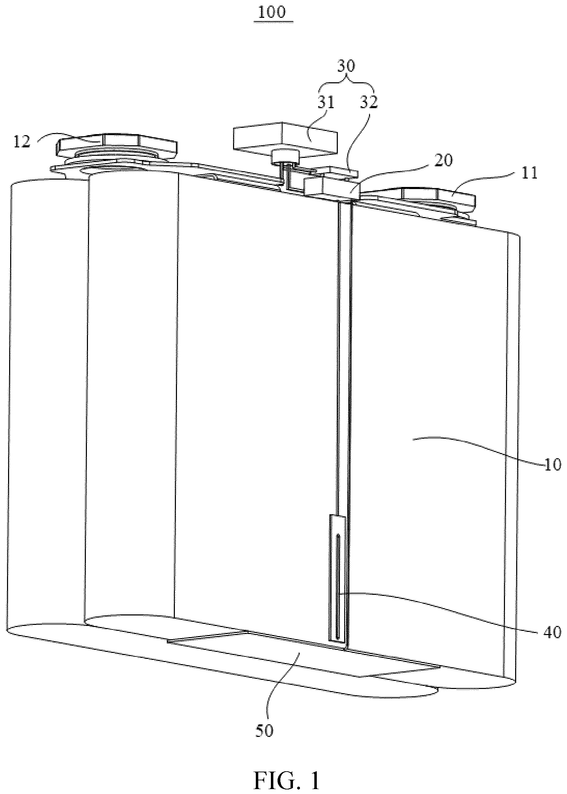

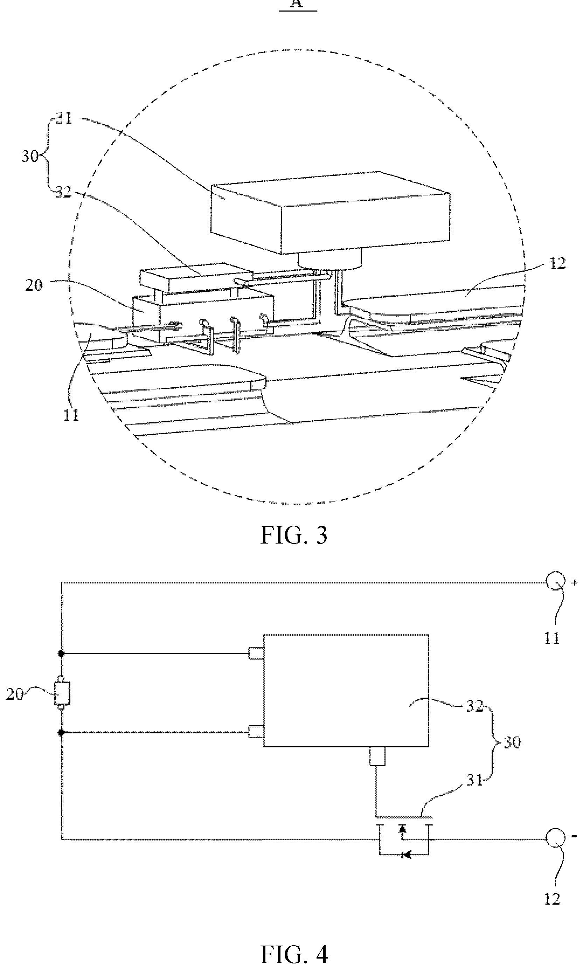

The present application provides a battery. The battery may be a lithium battery. Referring to FIGS. 1 to 3, the battery 100 includes:
a cell 10, a data processing chip 20, and a charging protector 30. The charging protector 30 is electrically connected to the cell 10 and the data processing chip 20. The charging protector 30 is arranged to control on or off of a circuit connected the cell 10 and the data processing chip 20.

When voltage of the data processing chip 20 is greater than a preset value, the circuit connected to the data processing chip 20 and the cell 10 in the charging protector 30 is disconnected. When the voltage of the data processing chip 20 is less than the preset value, the circuit connected to the data processing chip 20 and the cell 10 in the charging protector 30 is turned on.

In the present application, the charging protector 30 is electrically connected to the cell 10 and the data processing chip 20. When the power of the data processing chip 20 is sufficient, the voltage of the data processing chip 20 is greater than the preset value, and the circuit connected to the data processing chip 20 and the cell 10 in the charging protector 30 is disconnected. And at this time, the cell 10 stops charging the data processing chip 20. When the power of the data processing chip 20 is insufficient, the voltage of the data processing chip 20 is less than the preset value, and the circuit connected to the data processing chip 20 and the cell 10 in the charging protector 30 is turned on. And at this time, the cell 10 starts to charge the data processing chip 20. By providing the charging protector 30, the cell 10 can avoid over-charging caused by the cell 10 constantly charging the data processing chip 20 or short circuit of the cell 10 due to damage to the data processing chip 20, and the service life of the cell 10 can be prolonged. At the same time, when the power of the data processing chip 20 is insufficient, the charging protector 30 can charge the data processing chip 20 through the cell 10, which improves the technical problem that the data processing chip 20 cannot stably monitor the internal states of the battery 100 due to the power insufficient.

In a process of charging the data processing chip 20, a voltage preset value of the data processing chip 20 is set with reference to a rated voltage and a full charge voltage of the data processing chip 20. For example, the rated voltage of the data processing chip 20 is 3.7 V, an over-charge protecting voltage is 4.2 ± 0.05 V, and the voltage preset value of the data processing chip 20 is within a range of 3.7 V to 4. 25V.

In a process of discharging the data processing chip 20, the voltage preset value of the data processing chip 20 is set with reference to the rated discharge voltage of the data processing chip 20. For example, the over-discharge protection voltage of the data processing chip 20 is 2.3 V, and the voltage preset value of the data processing chip 20 is within a range of 2.3 V to 2. 4V.

The data processing chip 20 is configured to receive data collected by other sensors inside the cell 10 and transmit a collected data to an external terminal.

The battery 100 further includes a display panel. The display panel is provided outside the battery 100. the data processing chip 20 is electrically or wirelessly connected to the display panel. The data processing chip 20 transmits a collected data to the display panel. The display panel receives the data collected by the data processing chip 20 and displays it on the screen, so as to intuitively monitor internal pressure and temperature information of the battery 100, and improve safety performance of the battery 100.

With continued reference to FIGS. 1 to 3, in one embodiment, the cell 10 includes a first pole 11 and a second pole 12. The data processing chip 20 includes a first data pin and a second data pin. The first pole 11 is electrically connected to the first data pin, the second pole 12 is electrically connected to the charging protector 30, and the second data pin is electrically connected to the charging protector 30.

In some possible embodiments, the first pole 11 is one of a positive electrode and a negative electrode of the cell 10, and the second pole 12 is the other of the positive electrode and the negative electrode of the cell 10. When the second data pin of the data processing chip 20 is electrically connected to the charging protector 30, the first data pin of the data processing chip 20 is electrically connected to one of the positive electrode and the negative electrode of the cell 10. When a voltage of the data processing chip 20 is greater than a preset value, the circuit connected to the second pole 12 and the second data pin in the charging protector 30 is disconnected. When the voltage of the data processing chip 20 is less than the preset value, the circuit connected to the second pole 12 and the second data pin in the charge protector 30 is turned on. When the power of the data processing chip 20 is insufficient, the charging protector 30 can charge the data processing chip 20 through the cell 10, thereby improving the technical problem that the data processing chip 20 cannot stably monitor the internal state of the battery 100 due to the power insufficient.

Referring to FIGS. 1 to 3, in one embodiment, the charging protector 30 includes:
a switching transistor 31 electrically connected to the second pole 12 and the second data pin; and a protecting chip 32 electrically connected to the data processing chip 20.

When the voltage of the data processing chip 20 is greater than the preset value, the switching transistor 31 is turned off. When the voltage of the data processing chip 20 is less than the preset value, the switching transistor 31 is in an open state.

In some possible embodiments, the switching transistor 31 is one of a field effect transistor (FET), a junction field effect transistor (JFET), an N-channel JFET, a P-channel JFET, a metal oxide semiconductor field effect transistor (MOSFET), an N-channel MOSFET, a P-channel MOSFET, a small signal transistor, a small switching transistor 31, a power transistor, a high frequency transistor, a phototransistor, and a single junction transistor (UJT). The protecting chip 32 is set to monitor an instantaneous value of the voltage of the data processing chip 20. The switching transistor 31 is in an off state when the instantaneous value of the voltage of the data processing chip 20 is greater than the preset value. The switching transistor 31is in an on state when the instantaneous value of the voltage of the data processing chip 20 is less than the preset value.

The protecting chip 32 is electrically connected to the switching transistor 31 and is arranged to control the switching transistor 31 to be turned on or off. Alternatively, the protecting chip 32 is a wireless transceiver chip and controls the switching transistor 31 to be turned on or off by wireless transceiver.

Referring to FIGS. 1 to 4, in one embodiment, the switching transistor 31 includes a source, a drain, and a gate.

The protecting chip 32 includes a first protecting pin, a second protecting pin, and a third protecting pin.

The second pole 12 is electrically connected to one of the source and the drain. The second data pin is electrically connected to the other of the source and the drain.

The first protecting pin is electrically connected to the first data pin. The second protecting pin is electrically connected to the second data pin. The third protecting pin is electrically connected to the gate.

In some possible embodiments, the switching transistor 31 is an NMOS transistor. A model number of the protecting chip 32 is DW01. The second pole 12 is electrically connected to one of a source and a drain of the NMOS transistor. The second data pin is electrically connected to the other of the source and the drain of the NMOS transistor. The first protecting pin and the second protecting pin of the protecting chip 32 are electrically connected to the first data pin and the second data pin of the data processing chip 20, respectively. The protecting chip 32 is set to monitor the voltage instantaneous value of the data processing chip 20. The third protecting pin of the protecting chip 32 is electrically connected to the gate of the NMOS transistor. The protecting chip 32 is configured to control the NMOS transistor to be turned on or off.

At this time, the NMOS transistor is connected in series between the cell 10 and the data processing chip 20. When the voltage of the data processing chip 20 is less than a preset value, the NMOS transistor is in an open state, the circuit between the cell 10 and the data processing chip 20 is turned on, and the cell 10 charges the data processing chip 20. When the voltage of the data processing chip 20 is greater than the preset value, the NMOS transistor is in the off state, the circuit between the cell 10 and the data processing chip 20 is disconnected, and the cell 10 stops charging the data processing chip 20.

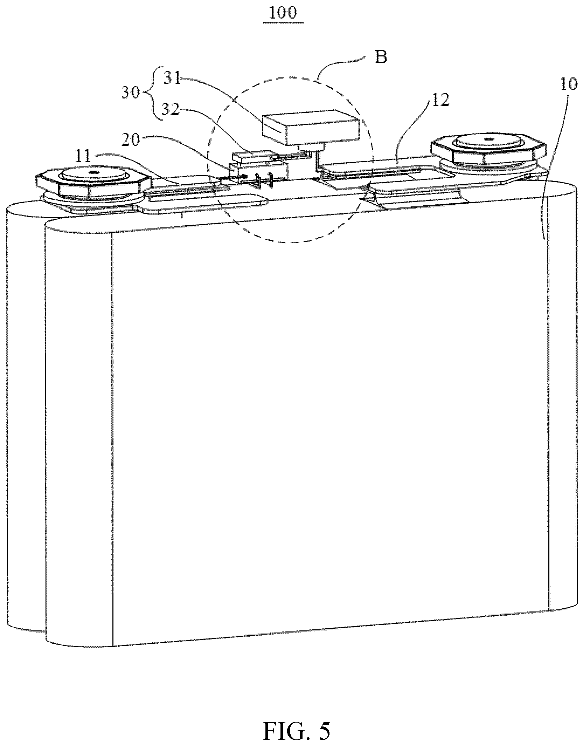

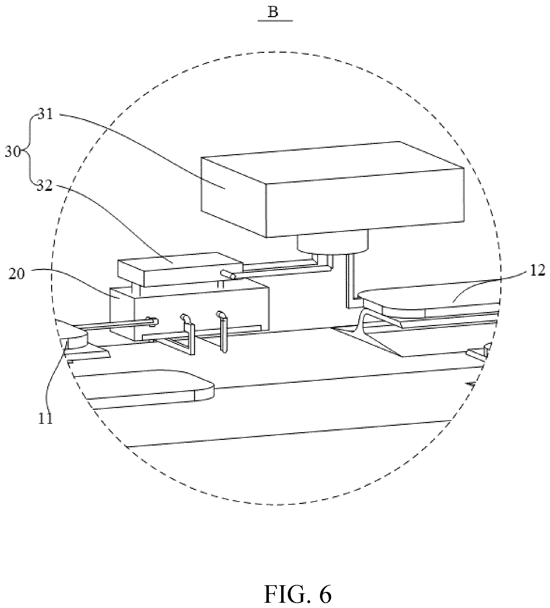

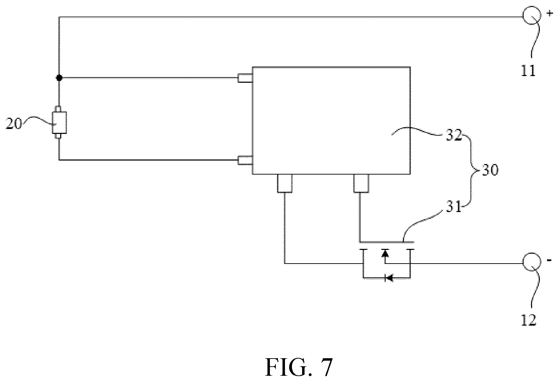

Referring to FIGS. 5 to 7, in one embodiment, the switching transistor 31 includes a source, a drain, and a gate. The protecting chip 32 includes a first protecting pin, a second protecting pin, a third protecting pin, and a fourth protecting pin. The second pole 12 is electrically connected to one of the source and the drain. The first protecting pin is electrically connected to the other of the source and the drain. The second protecting pin is electrically connected to the second data pin. The third protecting pin is electrically connected to the first data pin. The fourth protecting pin is electrically connected to the gate.

In some possible embodiments, the switching transistor 31 is an NMOS transistor. A model number of the protecting chip 32 is DW01. The second pole 12 is electrically connected to one of the source and the drain of the NMOS transistor. The first guard pin is electrically connected to the other of the source and the drain of the NMOS transistor. The second protecting pin and the third protecting pin of the protecting chip 32 are electrically connected to the second data pin and the first data pin of the data processing chip 20, respectively. The protecting chip 32 is set to monitor the voltage instantaneous value of the data processing chip 20. The fourth protecting pin of the protecting chip 32 is electrically connected to the gate of the NMOS transistor, and is configured to control the NMOS transistor to be turned on or off.

At this time, the NMOS transistor and the protecting chip 32 are connected in series between the cell 10 and the data processing chip 20. When the voltage of the data processing chip 20 is less than the preset value, the NMOS transistor is in an open state, the circuit between the cell 10 and the data processing chip 20 is turned on, and the cell 10 charges the data processing chip 20. When the voltage of the data processing chip 20 is greater than the preset value, the NMOS transistor is in the off state, the circuit between the cell 10 and the data processing chip 20 is disconnected, and the cell 10 stops charging the data processing chip 20.

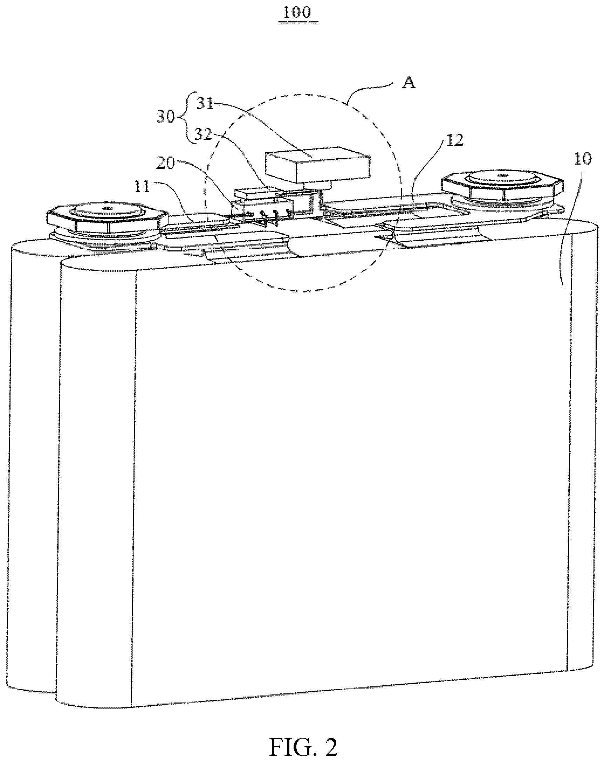

Referring to FIGS. 1 and 2, in one embodiment, the first pole 11, the second pole 12, and the data processing chip 20 are all provided at a first end of the cell 10. The first pole 11, the data processing chip 20, and the second pole 12 are provided at intervals along a longitudinal direction of the first end.

In some possible embodiments, the first pole 11, the second pole 12, and the data processing chip 20 are all provided at the first end of the cell 10, which facilitates internal wirings of the battery 100 and improves production efficiency of the battery 100.

Referring to FIGS. 1 and 2, in one embodiment, the battery 100 further includes a pressure sensor 40 disposed on an outer surface of the cell 10 and electrically connected to the data processing chip 20.

In some possible embodiments, the pressure sensor 40 is one of a strain-gauge pressure sensor, a piezoresistive pressure sensor, a capacitive pressure sensor, and a piezoelectric pressure sensor. When the pressure sensor 40 is a strain-gauge pressure sensor, the strain-gauge pressure sensor includes an elastomer and a strain gauge. The elastomer is arranged at a position where the outer surface of the cell 10 is expanded and deformed, and the strain gauge is attached to the elastomer. When the elastomer is deformed due to expansion of the cell 10, the strain gauge converts the deformation of the elastomer into a resistance signal, and the data processing chip 20 is electrically connected to the strain gauge, and the data processing chip 20 acquires deformation of the cell 10.

Referring to FIGS. 1 and 2, in one embodiment, the pressure sensor 40 is provided on one side of the cell 10. The data processing chip 20 includes a third data pin. The pressure sensor 40 is electrically connected to the third data pin.

In some possible embodiments, types of the cell 10 include a wound cell and a laminated cell. When the cell 10 is a wound cell, the pressure sensor 40 is provided on a side of the wound cell. When the cell 10 is a laminated cell, the pressure sensor 40 is provided on a side surface in a lamination direction of the laminated cell.

Referring to FIGS. 1 and 2, in one embodiment, the battery 100 further includes a temperature sensor 50 disposed on an outer surface of the cell 10 and electrically connected to the data processing chip 20.

In some possible embodiments, the temperature sensor 50 may be one of a thermistor, a thermocouple, a resistance temperature detector (RTD), an analog thermometer chip, a digital thermometer chip, a silicon diode, an infrared radiator. When the pressure sensor 40 is a thermistor, the thermistor is provided on the outer surface of the cell 10, and the data processing chip 20 acquires a surface temperature of the cell 10 by collecting a resistance data of the thermistor, and the temperature sensor 50 improves safety performance of the battery 100.

Referring to FIGS. 1 and 2, in one embodiment, the temperature sensor 50 is provided on a second end surface of the cell 10 facing away from a first end surface on which the first pole 11, the second pole 12, and the data processing chip 20 are provided. The data processing chip 20 includes a fourth data pin. The temperature sensor 50 is electrically connected to the fourth data pin.

In some possible embodiments, the temperature sensor 50 is provided on the second end surface, and is configured to monitor an instantaneous temperature value of a portion of the cell 10 away from the first end face to ensure the safety performance of the battery 100.

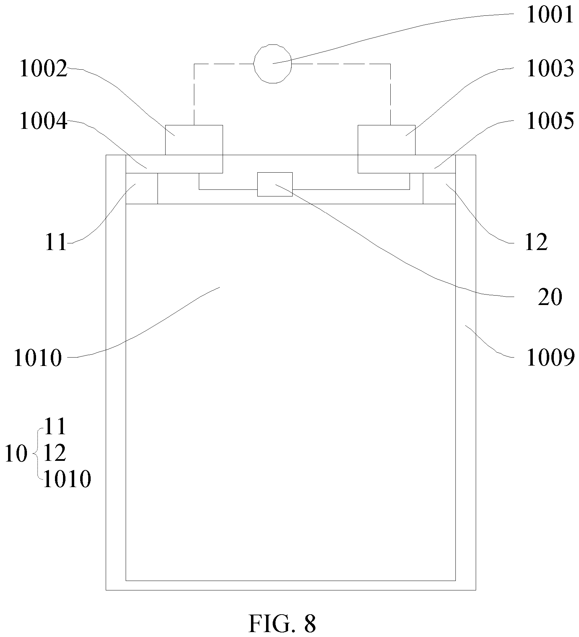

Referring to FIGS. 8 to 10, the battery 100 includes a top cover assembly 2001, the cell 10, and the data processing chip 20. The data processing chip 20 is located on the top cover assembly 2001. The cell 10 is connected to the data processing chip 20. The cell 10 supplies power to the data processing chip 20.

With continued reference to FIGS. 8 to 10, the cell 10 includes a positive electrode connecting tab 1005 and a negative electrode connecting tab 1004. The positive electrode connecting tab 1005 and the negative electrode connecting tab 1004 of the cell 10 are respectively connected to the data processing chip 20. The positive electrode connecting tab 1005 and the negative electrode connecting tab 1004 of the cell 10 are respectively fixed to the top cover assembly 2001.

The cell 10 further includes a cell body 1010, the first pole 11 and the second pole 12. The first pole 11 and the second pole 12 are located on the cell body 1010. The first pole 11 is connected to the positive electrode connecting tab 1005. The second pole 12 is connected to the negative electrode connecting tab 1004.

The data processing chip 20 includes a voltage conversion component that can convert a voltage transmitted by the cell 10 into a voltage required for internal power supply of the data processing chip 20.

In some possible embodiments, the positive electrode connecting tab 1005 and the negative electrode connecting tab 1004 are positioned between the cell body 1010 and the top cover assembly 2001.

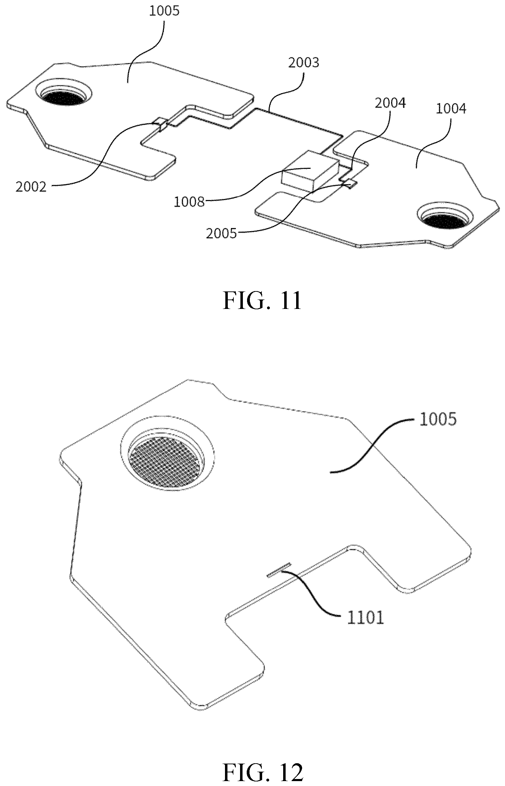

In some possible embodiments, as shown in FIG. 12, two opposite sides of the positive electrode connecting tab 1005 are provided with first grooves 1101. The two opposite sides are parallel to the top cover assembly 2001. An upper side of the positive electrode connecting tab 1005 is provided with the first grooves 1101. Positions of the first groove 1101 in a lower side surface of the positive electrode connecting tab 1005 is opposite to positions of the first groove 1101 in the upper side surface of the positive electrode connecting tab 1005 (not shown). Two opposite sides of the negative electrode connecting tab (1004) are provided with second grooves (not shown).

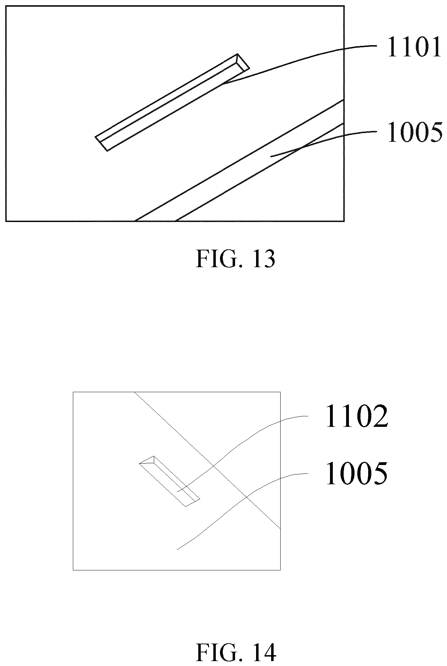

In some possible embodiments, as shown in FIG. 13, the positive electrode connecting tab 1005 and the negative electrode connecting tab 1004 each includes a first surface and a second surface disposed opposite the first surface. The first grooves 1101 extend perpendicularly from the first surface to the second surface and/or extend perpendicularly from the second surface to the first surface.

In some possible embodiments, as shown in FIG. 14, the positive electrode connecting tab 1005 and the negative electrode connecting tab 1004 each includes a first surface and a second surface disposed opposite to the first surface. The first grooves 1101 extend from the first surface to the second surface or extend from the second surface to the first surface. At least one of the first grooves 1101 has a triangular shape in a cross section perpendicular to the top cover assembly 2001.

In the present application, the positive electrode connecting tab 1005 and the negative electrode connecting tab 1004 of the cell 10 are respectively connected to the data processing chip 20, so that the data processing chip 20 is powered by electric energy of the cell 10 itself, thereby solving a problem of unstable power supply caused by wireless charging and a problem of space occupation caused by power supply using built-in battery.

As shown in FIG. 8, the battery 100 further includes an external module 1001, wherein the external module 1001 is respectively connected to a first pole lug 1002 and the second pole lug 1003 of the cell 10. The first pole lug 1002 is connected to the negative electrode connecting tab 1004. The second pole lug 1003 is connected to the positive electrode connecting tab 1005. Finally, the negative electrode connecting tab 1004 is connected to the first pole 11, and the positive electrode connecting tab 1005 is connected to the second pole 12. So that the external module 1001 is indirectly connected to the cell 10.

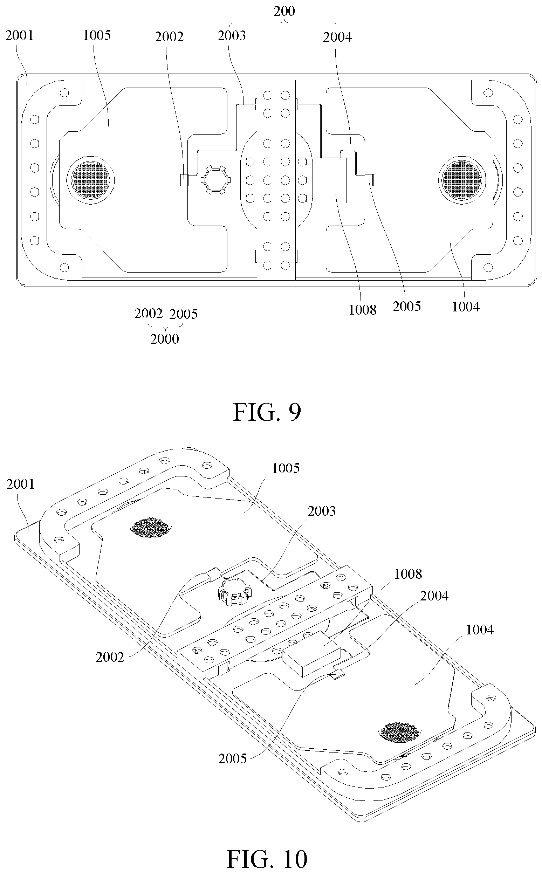

In some possible embodiments, as shown in FIGS. 9 to 11, the battery 100 further includes an adapter clamp assembly 2000 and a connecting wire assembly 200 connected to the adapter clamp assembly 2000. The adapter clamp assembly 2000 is connected to the cell 10. The connecting wire assembly 200 is connected to the data processing chip 20.

The adapter clamp assembly 2000 includes a first adapter clamp 2002 and a second adapter clamp 2005. The first adapter clamp 2002 is connected to the positive electrode connecting tab 1005. The second adapter clamp 2005 is connected to the negative electrode connecting tab 1004. Configuration of the second adapter clamp 2005 may or may not be consistent with configuration of the first adapter clamp 2002. The configuration of the second adapter clamp 2005 may be consistent with the configuration of the first adapter clamp 2002.

The connecting wire assembly 200 includes a first connecting wire 2003 and a second connecting wire 2004. One end of the first connecting wire 2003 is connected to the first adapter clamp 2002. The other end of the first connecting wire 2003 (i.e., one end away from the first adapter clamp 2002) is connected to the data processing chip 20. One end of the second connecting wire 2004 is connected to the second adapter clamp 2005, and the other end of the second connecting wire 2004 (i.e., one end away from the second adapter clamp 2005) is connected to the data processing chip 20.

The other end of the first connecting wire 2003 may be directly connected to the data processing chip 20 or may be connected to the charging protector 30 or other devices, thereby indirectly connecting the data processing chip 20 through the charging protector 30 or other devices. Similarly, the other end of the second connecting wire 2004 may be directly connected to the data processing chip 20, or may be connected to the charging protector 30 or other devices, thereby being indirectly connected to the data processing chip 20 through the charging protector 30 or other devices.

In some possible embodiments, materials of the first adapter clamp 2002 and the first connecting wire 2003 may be conductive materials such as aluminum. The first connecting wire 2003 may be wrapped with an insulating layer. A material of the second connecting wire 2004 may be a conductive material such as copper. The material of the second connecting wire 2004 may be wrapped with an insulating layer. A material of the second adapter clamp 2005 may be a conductive material such as copper.

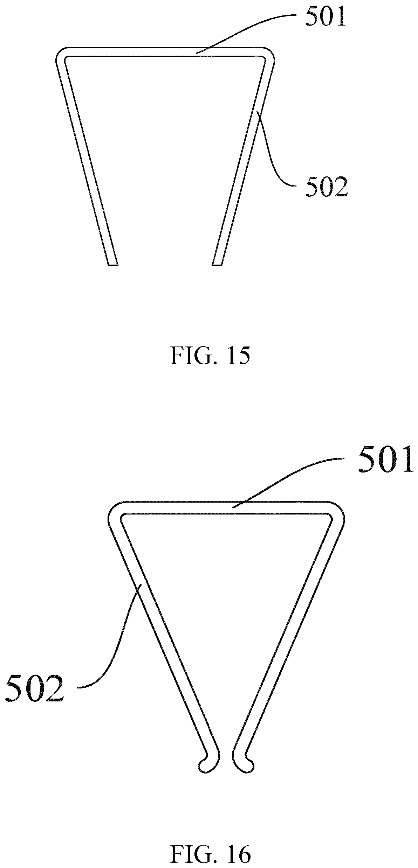

In some possible embodiments, as shown in FIG. 15, the first adapter clamp 2002 includes a first supporting arm 501 and two first clamping arms 502 respectively connected to the first supporting arm 501. Positions of the two first clamping arms 501 are opposite to each other. One end of the two first clamping arms 502 away from the first supporting arm 501 is close to each other. The two first clamping arms 502 are clamped on both sides of the positive electrode connecting tab 1005.

Similarly, the second adapter clamp 2005 may include a second supporting arm and two second clamping arms respectively connected to the second supporting arm. Positions of the two second clamping arms are opposite to each other. One end of the two second clamping arms away from the second supporting arm is close to each other. The two second clamping arms are clamped on both sides of the negative electrode connecting tab 1004.

By clamping the positive electrode connecting tab 1005 by the two first clamping arms 502 of the first adapter clamp 2002 and clamping the negative electrode connecting tab 1004 by the two second clamping arms of the second adapter clamp 2005, frictional forces between the first adapter clamp 2002 and the positive electrode connecting tab 1005, and between the second adapter clamp 2005 and the negative electrode connecting tab 1004 are increased. Falling off phenomenon between the first adapter clamp 2002 and the positive electrode connecting tab 1005, and between the second adapter clamp 2005 and the negative electrode connecting tab 1004 is less likely to occur when the battery 100 is shaken.

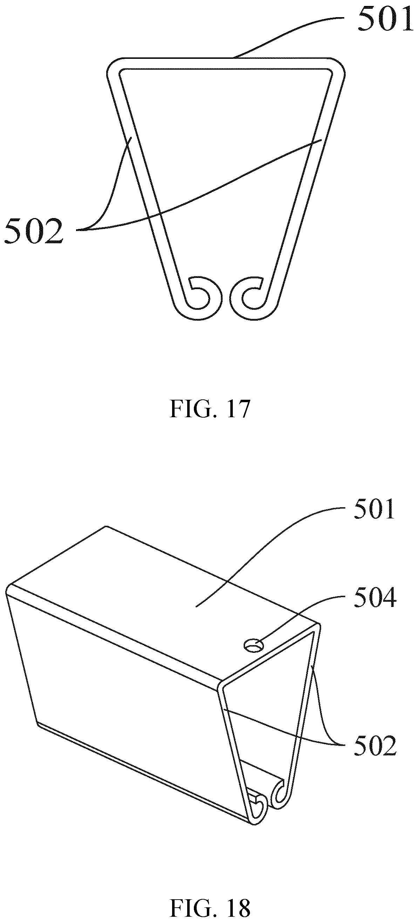

In some possible embodiments, as shown in FIG. 18, the first supporting arm 501 of the first adapter clamp 2002 is provided with a first conductive wire hole 504. The second supporting arm of the second adapter clamp 2005 is provided with a second conductive wire hole. Among them, one end of the first connecting wire 2003 is fixed in the first wire hole 504, and one end of the second connecting wire 2004 is fixed in the second wire hole.

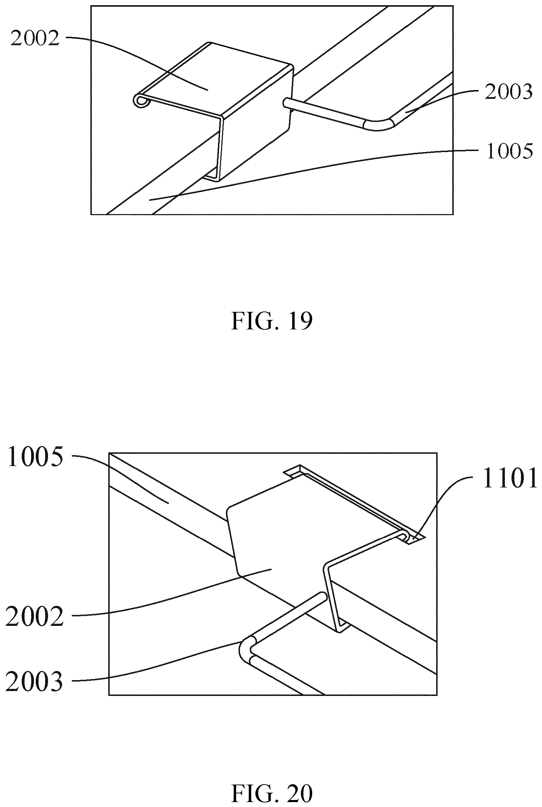

As shown in FIG. 19, by providing the first wire hole 504 in the first supporting arm 501 and the second wire hole in the second supporting arm, respectively, the first connecting wire 2003 can be connected to the first adapter clamp 2002 through the first wire hole 504, and the second connecting wire 2004 can be connected to the second adapter clamp 2005 through the second wire hole, thereby ensuring stability between the first adapter clamp 2002 and the first connecting wire 2003, and between the second adapter clamp 2005 and the second connecting wire 2004.

It should be noted that the first conductive wire hole 504 and the second conductive wire hole may be provided at other positions on the first supporting arm 501 and the second supporting arm, respectively, according to specific circumstances. The above-described examples are only for better description of the present aspect, and are not limited to the present aspect.

In some possible embodiments, as shown in FIG. 15, one of the first clamping arms 502 of the first adapter clamp 2002 extends from the first supporting arm 501 along a first direction, and the other first clamping arm 502 extends from the first supporting arm 501 along a second direction, the first direction intersecting the second direction. A structure of the second adapter clamp 2005 is consistent with a structure of the first adapter clamp 2002, and the description thereof is omitted here.

Extension lines of the two first clamping arms 502 of the first adapter clamp 2002 and the two second clamping arm of the second adapter clamp 2005 are intersected. An angle formed by the intersection is an acute angle, so that the first adapter clamp 2002 and the second adapter clamp 2005 can be clamped on the positive electrode connecting tab 1005 and the negative electrode connecting tab 1004, respectively, without slipping phenomenon.

In some possible embodiments, as shown in FIG. 20, one end of the first clamping arm 502 away from the first supporting arm 501 is clamped within the first groove 1101, and one end of the second clamping arm away from the second supporting arm is clamped within the second groove. By clamping the first clamping arm 502 and the second clamping arm in the first groove 1101 and the second groove, respectively, the first clamping arm 502 and the second clamping arm can be jammed in the first groove 1101 and the second groove, respectively, further increasing the stability of connections between the first adapter clamp 2002 and the positive electrode connecting tab 1005, and between the second adapter clamp 2005 and the negative electrode connecting tab 1004.

In some possible embodiments, as shown in FIG. 16, the first adapter clamp 2002 further includes two first clamping arms 502 connected to one end of the first clamping arm 502 away from the first supporting arm 501. The first clamping arm 502 is crimped from one end of the first clamping arm 502 away from the first supporting arm 501 toward the first supporting arm 501. The two first clamping arms 502 are positioned between the two first clamping arms 502. The second adapter clamp 2005 further includes two second crimping portions connected to one end of the second clamping arm away from the second supporting arm. The second crimping portion is crimped from one end of the second clamping arm away from the second supporting arm toward the second supporting arm. The two second clamping arms are positioned between the two second crimping portions. The two second crimping portions are clamped between both sides of the negative electrode connecting tab 1004.

By adding two first clamping arms 502 between the two first clamping arms 502 of the first adapter clamp 2002 and adding two second crimping portions between the two second clamping arms of the second adapter clamp 2005, stability of a connection of the first adapter clamp 2002 to the positive electrode connecting tab 1005 and stability of a connection of the second adapter clamp 2005 to the negative electrode connecting tab 1004 are enhanced.

In some possible embodiments, as shown in FIG. 17, the first adapter clamp 2002 further includes two first clamping arm 502 connected to one end of the first clamping arm 502 away from the first supporting arm 501. The two first clamping arms 502 connected to the two first clamping arms 502 are located between the two first clamping arms 502. The two first clamping arms 502 connected to the two first clamping arms 502 are crimped from one end of the first clamping arm 502 away from the first supporting arm 501 toward the first supporting arm 501. The second adapter clamp 2005 further includes two second crimping portions connected to one end of the second clamping arm away from the second supporting arm. The two second crimping portions connected to the two second clamping arms are located between the two second clamping arms. The two second crimping portions connected to the two second clamping arms are crimped from one end of the second clamping arm away from the second supporting arm in a direction of the second supporting arm.

By adding two first clamping arms 502 between the two first clamping arms 502 of the first adapter clamp 2002 and adding two second crimping portions between the two second clamping arms of the second adapter clamp 2005, one of the two first clamping arms 502 is crimped toward the other of the two first clamping arms 502 (i.e. bent inward), and one of the two second crimping portions is crimped toward the other of the two second crimping portions, which can avoid the problem that related insulating tapes inside the battery core 10 are broken and failed due to a sharp end of the second clamping arm 502 when the two first clamping arms 502 and the two second crimping portions of the second clamping arm 502 are clamped on the positive electrode connecting tab 1005 and the negative electrode connecting tab 1004, respectively.

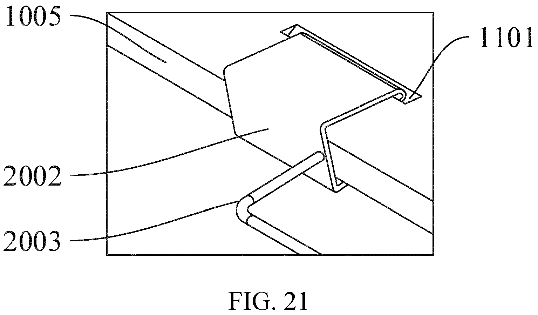

In one embodiment, as shown in FIGS. 20 and 21, the two first clamping arms 502 are clamped in the first groove 1101 of the positive electrode connecting tab 1005, and the two second crimping portions are clamped in the second groove of the negative electrode connecting tab 1004.

The embodiments of the present application provides a battery, in which the positive electrode and the negative electrode inside the cell 10 are respectively connected to the data processing chip, so that the data processing chip can be supplied with power through the computer of the cell 10 itself, effectively solving the problem of unstable power supply caused by using wireless power supply, and simultaneously solving the problem of space occupation caused by using built-in battery power supply.

Embodiments of the present application also provide a battery system comprising the battery described above. This battery system has all the advantages of the batteries described above and will not be described herein.

## Claims

1. A battery (100), comprising:
a cell (10);
a data processing chip (20); and
a charging protector (30) electrically connected to the cell (10) and the data processing chip (20); wherein the charging protector (30) is arranged to control on or off of a circuit connected to the cell (10) and the data processing chip (20).

2. The battery (100) according to claim 1, wherein the cell (10) comprises a first pole (11) and a second pole (12);
wherein the data processing chip (20) comprises a first data pin and a second data pin; and
wherein the first pole (11) is electrically connected to the first data pin, the second pole (12) is electrically connected to the charging protector (30), and the second data pin is electrically connected to the charging protector (30).

3. The battery (100) according to claim 2, wherein the charging protector (30) comprises:
a switching transistor (31) electrically connected to the second pole (12) and the second data pin; and
a protecting chip (32) electrically connected to the data processing chip (20).

4. The battery (100) according to claim 3, wherein the switching transistor (31) comprises a source, a drain, and a gate;
wherein the protecting chip (32) comprises a first protecting pin, a second protecting pin, and a third protecting pin;
wherein the second pole (12) is electrically connected to one of the source and the drain, and the second data pin is electrically connected to the other of the source and the drain; and
wherein the first protecting pin is electrically connected to the first data pin; the second protecting pin is electrically connected to the second data pin; and the third protecting pin is electrically connected to the gate.

5. The battery (100) according to claim 3, wherein the switching transistor (31) comprises a source, a drain, and a gate;
wherein the protecting chip (32) comprises a first protecting pin, a second protecting pin, a third protecting pin, and a fourth protecting pin; and
wherein the second pole (12) is electrically connected to one of the source and the drain, the first protecting pin is electrically connected to the other of the source and the drain, the second protecting pin is electrically connected to the second data pin; the third protecting pin is electrically connected to the first data pin; and the fourth protecting pin is electrically connected to the gate.

6. The battery (100) according to any one of claims 2 to 5, wherein the first pole (11), the second pole (12), and the data processing chip (20) are all provided at a first end of the cell 10; and the first pole (11), the data processing chip (20), and the second pole (12) are provided at intervals along a longitudinal direction of the first end.

7. The battery (100) according to any one of claims 2 to 5, wherein the battery (100) further comprises at least one of a pressure sensor (40) disposed on an outer surface of the cell (10) and electrically connected to the data processing chip (20) and a temperature sensor (50) disposed on the outer surface of the cell (10) and electrically connected to the data processing chip (20).

8. The battery (100) according to claim 7, wherein the pressure sensor (40) is provided on one side of the cell (10); and
wherein the data processing chip (20) further comprises a third data pin electrically connected to the pressure sensor 40.

9. The battery (100) according to claim 7, wherein the temperature sensor (50) is provided on a second end surface of the cell (10) facing away from a first end surface on which the first pole (11), the second pole (12), and the data processing chip (20) are provided; and
wherein the data processing chip (20) further comprises a fourth data pin electrically connected to the temperature sensor (50).

10. The battery (100) according to any one of claims 1 to 9, further comprising a top cover assembly (2001), an adapter clamp assembly (2000) and a connecting wire assembly (200); wherein the data processing chip (20) is located on the top cover assembly (2001); and
wherein the adapter clamp assembly (2000) is connected to the cell (10) and the connecting wire assembly (200), one end of the connecting wire assembly (200) away from the adapter clamp assembly (2000) is connected to the data processing chip (20), the cell (10) is electrically connected to the data processing chip (20), and the cell (10) supplies power to the data processing chip (20).

11. The battery (100) according to claim 10, wherein the cell (10) comprises a positive electrode connecting tab (1005) and a negative electrode connecting tab (1004);
wherein the adapter clamp assembly (2000) comprises a first adapter clamp (2002) and a second adapter clamp (2005);
wherein the connecting wire assembly (200) comprises a first connecting wire (2003) and a second connecting wire (2004); and
wherein the first adapter clamp (2002) is connected to the positive electrode connecting tab (1005), one end of the first connecting wire (2003) is connected to the first adapter clamp (2002), and the other end of the first connecting wire (2003) is connected to the data processing chip (20); and wherein the second adapter clamp (2005) is connected to the negative electrode connecting tab (1004), one end of the second connecting wire (2004) is connected to the second adapter clamp (2005), and the other end of the second connecting wire (2004) is connected to the data processing chip (20).

12. The battery (100) according to claim 11, wherein the first adapter clamp (2002) comprises a first supporting arm (501) and two first clamping arms (502) respectively connected to the first supporting arm (501), positions of the two first clamping arms (501) are opposite to each other, one end of the two first clamping arms (502) away from the first supporting arm (501) is close to each other, and the two first clamping arms (502) are clamped on both sides of the positive electrode connecting tab (1005); and
wherein the second adapter clamp (2005) comprises a second supporting arm and two second clamping arms respectively connected to the second supporting arm, positions of the two second clamping arms are opposite to each other, one end of the two second clamping arms away from the second supporting arm is close to each other, and the two second clamping arms are clamped on both sides of the negative electrode connecting tab (1004).

13. The battery (100) according to claim 12, wherein the first supporting arm (501) is provided with a first conductive wire hole (504); and the second supporting arm is provided with a second conductive wire hole; and
wherein one end of the first connecting wire (2003) is fixed in the first wire hole (504), and one end of the second connecting wire (2004) is fixed in the second wire hole.

14. The battery (100) according to claim 12, wherein one of the first clamping arms (502) of the first adapter clamp (2002) extends from the first supporting arm (501) along a first direction and the other of the first clamping arms (502) extends from the first supporting arm (501) along a second direction, and the first direction intersecting the second direction.

15. The battery (100) according to claim 14, wherein the first adapter clamp (2002) further comprises two first crimping portion connected to one end of the two first clamping arm (502) away from the first supporting arm (501), the first crimping portion is crimped from one end of the first clamping arm (502) away from the first supporting arm (501) toward the first supporting arm (501), and the two first clamping arms (502) are positioned between the two first crimping portion.

16. The battery (100) according to claim 14, wherein the first adapter clamp (2002) further comprises two first crimping portion connected to one end of the two first clamping arm (502) away from the first supporting arm (501), and the two first crimping portion connected to the two first clamping arms (502) are located between the two first clamping arms (502) and are crimped from one end of the first clamping arm (502) away from the first supporting arm (501) toward the first supporting arm (501).

17. The battery (100) according to claim 14, wherein two opposite sides of the positive electrode connecting tab (1005) are provided with first grooves (1101), two opposite sides of the negative electrode connecting tab (1004) are provided with second grooves, one end of the first clamping arm (502) away from the first supporting arm (501) is clamped within the first groove (1101), and one end of the second clamping arm away from the second supporting arm is clamped within the second groove.

18. The battery (100) according to claim 17, wherein the positive electrode connecting tab (1005) and the negative electrode connecting tab (1004) each comprises a first surface and a second surface disposed opposite the first surface; and
wherein the first grooves (1101) extend perpendicularly from the first surface to the second surface or extend perpendicularly from the second surface to the first surface.

19. The battery (100) according to claim 17, wherein the positive electrode connecting tab (1005) and the negative electrode connecting tab (1004) each comprises a first surface and a second surface disposed opposite the first surface; and
wherein the first grooves (1101) extend from the first surface to the second surface or extend from the second surface to the first surface; and at least one of the first grooves (1101) has a triangular shape in a cross section perpendicular to the top cover assembly (2001).

20. A battery system comprising the battery (100) as claimed in any one of claims 1 to 19.
